# EUROPEAN PATENT SPECIFICATION

(11) **EP 4 587 902 B1**
(45) Date of publication and mention of the grant of the patent: **15.07.2026**
(21) Application number: 23764974.4
(22) Date of filing: 11.09.2023
(51) Int. Cl.: G05D 23/13

(54) **THERMOSTATIC MIXING VALVE**
THERMOSTATMISCHVENTIL
ROBINET MÉLANGEUR THERMOSTATIQUE

(30) Priority: 13.09.2022 EP 22195421
(43) Date of publication of application: 23.07.2025
(73) Proprietor: Pittway Sarl, 1180 Rolle (CH)
(72) Inventor: RAULE, Steffen, 69412 Eberbach (DE); HILBERS, Ralf, 69429 Waldbrunn (DE)
(74) Representative: Sturm, Christoph
(86) International application number: PCT/EP2023/074829
(87) International publication number: WO 2024/056565

(56) References cited:
- WO-A1-2017/075668
- AU-A1- 2019 204 428
- AU-B2- 2017 200 743

## Description

The invention relates to a thermostatic mixing valve.

The product leaflet "resideo Safety Valves, Braukmann TM50, ENOH-1326GE23 R0420, Resideo Technologies, ^{©} 2020," discloses a thermostatic mixing valve according to the prior art. Said thermostatic mixing valve comprises the following: A housing, the housing having a first inlet port for water having a first temperature, a second inlet port for water having a second temperature, and an outlet port for mixed water having a mixing temperature depending on a mixing ratio of the water having the first temperature and of the water having the second temperature. A valve insert positioned within the housing, wherein the valve insert has a tubular element, a thermal element and a spring element, wherein the tubular element, the thermal element and the spring element of the valve insert control together the mixing ratio of the mixed water such that an actual value of the mixing temperature corresponds to a nominal value of mixing temperature. A setting unit having a spindle and a handle, wherein setting unit is configured to set the nominal value of the mixing temperature. The spindle rotates and translates upon rotation of the handle. The relative translational position of the spindle within the housing defines the nominal value of mixing temperature. Said thermostatic mixing valve can be operated in a first operation mode only, namely in a temperature control operation mode. The same cannot be operated in a second operation mode, namely in a thermal disinfection operation mode.

EP 1 118 049 B1 discloses another thermostatic mixing valve according to the prior art. This thermostatic mixing valve can also be operated in a first operation mode only, namely in a temperature control operation mode. The same cannot be operated in a second operation mode, namely in a thermal disinfection operation mode.

AU 2017 200 743 B2 discloses thermostatic mixing valve which can be operated in a first operation mode namely in a temperature control operation mode, and in a second operation mode, namely in a thermal disinfection operation mode. The thermostatic mixing valve disclosed in AU 2017 200 743 B2 comprises a gripping mechanical key. The gripping mechanical key is used to set the nominal value of the mixing temperature by rotating a head or spindle. Further on, the gripping mechanical key is used to select the operation mode of the thermostatic mixing valve, namely either the first operation mode, namely the temperature control operation mode, or the second operation mode, namely the disinfection operation mode, by lifting or lowering a piston guided by the head or spindle. This thermostatic mixing valve requires an additional spring element acting on the head or spindle and on the piston. Further, there is a risk that the position of the head or spindle is changed unintentionally when using the gripping mechanical key.

WO 2017/ 075 668 A1 discloses a thermostatic mixing valve according to the preamble of claim 1.

Against this background, a novel thermostatic mixing valve is provided.

The thermostatic mixing valve according to the present invention comprises a housing, the housing comprising a first inlet port for water having a first temperature, a second inlet port for water having a second temperature, and an outlet port for mixed water having a mixing temperature depending on a mixing ratio of the water having the first temperature and of the water having the second temperature.

The thermostatic mixing valve according to the present invention further comprises a valve insert positioned within the housing, wherein the valve insert has a tubular element, a thermal element and a spring element, wherein the tubular element, the thermal element and the spring element of the valve insert control together the mixing ratio of the mixed water such that an actual value of the mixing temperature corresponds to a nominal value of mixing temperature.

The thermostatic mixing valve according to the present invention further comprises a first setting unit having a first spindle and being configured to set the nominal value of the mixing temperature, wherein the first spindle comprises an outer thread engaging an inner thread of the housing.

The thermostatic mixing valve according to the present invention further comprises a second setting unit having a second spindle and being configured to select an operation mode of the thermostatic mixing valve, wherein the second spindle is guided within an opening the first spindle, and wherein and wherein the second spindle comprises an outer thread engaging an inner thread of the first spindle, namely of the opening of the first spindle in which the second spindle is guided.

A rotation of the first spindle relative to the housing causes a linear movement of the first spindle relative to the housing and together with the linear movement of the first spindle relative to the housing a linear movement of the second spindle relative to the housing, such that the relative position between the first spindle and the second spindle does not change.

The second spindle is configured to provide a linear movement of the second spindle when rotating the second spindle relative to the first spindle while the position of the first spindle remains unchanged in order to select either a first operation mode or a second operation mode for the thermostatic mixing valve.

The first operation mode may also be called temperature control operation mode.

The second operation mode may also be called thermal disinfection operation mode.

The thermostatic mixing valve according to the present invention does not require an additional spring element. Further, the risk that the position of the first spindle is changed unintentionally is minimized.

If the first operation mode is selected by the second setting unit, the tubular element, the thermal element and the spring element control together the mixing ratio of the mixed water such that the actual value of the mixing temperature corresponds to the nominal value set by the first setting unit.

If the second operation mode is selected by the second setting unit, the tubular element, the thermal element and the spring element control together the mixing ratio of the mixed water such that the actual value of the mixing temperature corresponds to a disinfection value set by the second setting unit.

In one aspect of the first embodiment of the thermostatic mixing valve according to the present invention, the first setting unit comprises the first spindle and a locking element, wherein the first spindle is configured to provide a linear movement of the first spindle when rotating the first spindle to set the nominal value of the mixing temperature, and wherein the locking element is configured to lock the nominal value of the mixing temperature set by the first spindle. In this embodiment the nominal value of the mixing temperature is factory set and cannot be changed in the field.

In a second embodiment of the thermostatic mixing valve according to the present invention, the first setting unit comprises the first spindle and a first handle. The first handle and the first spindle are configured to provide a linear movement of the first spindle upon a rotation of the first handle in order to set the nominal value of the mixing temperature. In this embodiment the nominal value of the mixing temperature can be changed in the filed by using the first handle.

Preferably, the second setting unit comprises the second spindle and an actuator, wherein the actuator is configured to provide the rotation of the second spindle relative to the first spindle, and wherein the second spindle is configured to provide the linear movement of the same upon the rotation of the second spindle in order to select either the first operation mode or the second operation mode for the thermostatic mixing valve. A rotation of the first spindle causes a linear movement of the first spindle and together with the linear movement of the first spindle a linear movement of the second spindle. A rotation of the second spindle causes a linear movement of the second spindle while the position of the first spindle remains unchanged. This provides a simple and reliable design of the thermostatic mixing valve. The same does not require an additional spring element. Further, there risk that the position of the first spindle is changed unintentionally is minimized.

Preferred developments of the invention are provided by the dependent claims and the description which follows.

Exemplary embodiments are explained in more detail on the basis of the drawing, in which:
- Figure 1: shows a perspective view of a thermostatic mixing valve according to a first embodiment of the invention;
- Figure 2: shows a top view of the thermostatic mixing valve of Figure 1;
- Figure 3: shows a cross-section of the thermostatic mixing valve of Figure 1 in a first operation mode of the same which may also be called temperature control operation mode;
- Figure 4: shows a cross-section of the thermostatic mixing valve of Figure 1 in a second operation mode of the same which may also be called thermal disinfection operation mode;
- Figure 5: shows a perspective view of a partly disassembled thermostatic mixing valve according to the invention of Figure 1;
- Figure 6: shows a top view of Figure 5,
- Figure 7: shows a perspective view of a thermostatic mixing valve according to a second embodiment of the invention.

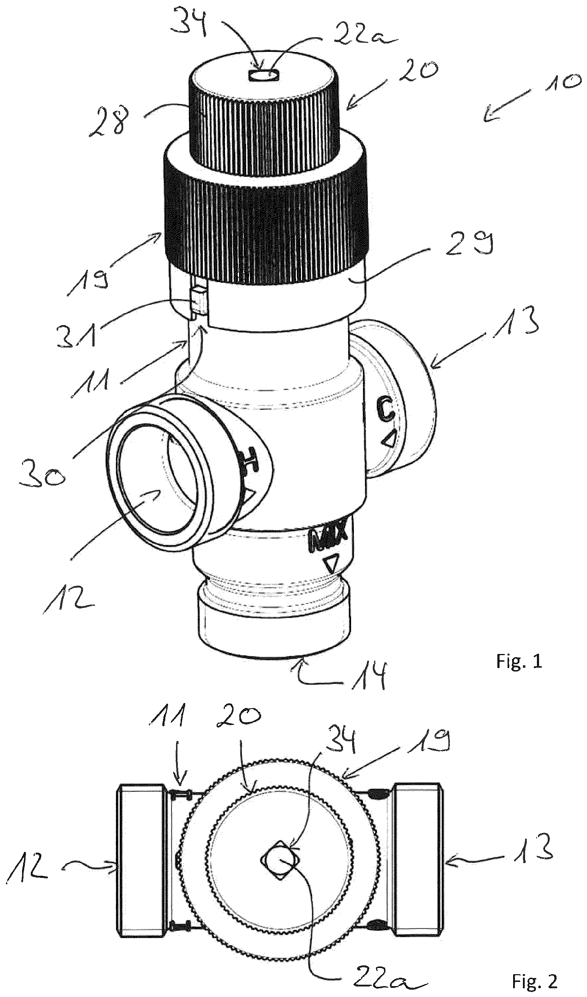

Figures 1 to 6 illustrate a first embodiment of a thermostatic mixing valve 10 according to the invention.

The thermostatic mixing valve 10 comprises a housing 11. The housing 11 has a first inlet port 12 for water having a first temperature, a second inlet port 13 for water having a second temperature, and an outlet port 14 for mixed water having a mixing temperature depending on a mixing ratio of the water having the first temperature and of the water having the second temperature.

The water having the first temperature is usually called hot water and the first inlet port 12 is usually called hot water inlet port. The water having the second temperature is usually called cold water and the second inlet port 13 is usually called cold water inlet port.

The thermostatic mixing valve 10 comprises a valve insert 15 positioned within the housing 11. The valve insert 15 comprises a tubular element 16, a thermal element 17 and a spring element 18. The tubular element 16, the thermal element 17 and the spring element 18 control together the mixing ratio of the mixed water such that an actual value of the mixing temperature corresponds to a nominal value of mixing temperature.

The tubular element 16 is guided within the housing 11 and can move in linear or translational direction relative to the housing 11. The tubular element 16 has an outer wall section 16a with openings 16b, 16c.

Depending on the relative translational position of the tubular element 16 within the housing 11, the opening 16b is in communication with the first inlet port 12 and/or the opening 16c is in communication second inlet port 13.

The spring element 18 abuts with a first end 18a against the housing 11, namely against a section 11a of the housing 11 close to the outlet port 14 of the housing 11. The spring element 18 abuts with a second end 18b against the tubular element 16, namely against an end of the outer wall section 16a of the tubular element 16. The spring force of the spring element 18 tends to push the tubular element 16 in a direction away from the outlet port 14 of the housing 11.

The thermal element 17 is partially accommodated within the tubular element 16. The thermal element 17 abuts against the tubular element 16. The tubular element 16 comprises ribs 16d positioned radially inwards of the outer wall section 16a. A first portion 17a of the thermal element 17 abuts against said ribs 16d of the tubular element 16.

The thermostatic mixing valve 10 comprises a first setting unit 19 and a second setting unit 20.

The first setting unit 19 has a first spindle 21 and is configured to set the nominal value of the mixing temperature.

The second setting unit 20 has a second spindle 22 and is configured to select an operation mode of the thermostatic mixing valve 10, namely either a first operation mode in which the nominal value of the mixing temperature set by the first setting unit 19 applies, or a second operation mode in which in which the nominal value of the mixing temperature set by the first setting unit 19 does not apply. The first operation mode may also be called temperature control operation mode. The second operation mode may also be called thermal disinfection operation mode.

The second spindle 22 of the second setting unit 20 is guided within an opening of the first spindle 20 of the first setting unit 19.

The second spindle 22 of the second setting unit 20 is configured to provide a linear movement of the second spindle 22 relative to the first spindle 21 and relative to the housing 11 when rotating the second spindle 22 relative to the first spindle 21 in order to select either the first operation mode or the second operation mode for the thermostatic mixing valve 10.

As mentioned above, in the first operation mode the nominal value of the mixing temperature set by the first setting unit 19 applies. So, in the first operation mode the tubular element 16, the thermal element 17 and the spring element 18 control together the mixing ratio of the mixed water such that the actual value of the mixing temperature corresponds to the nominal value set by the first setting unit 19. In the second operation mode the nominal value of the mixing temperature set by the first setting unit 19 does not apply. In the second operation mode the tubular element 16, the thermal element 17 and the spring element 18 control together the mixing ratio of the mixed water such that the actual value of the mixing temperature corresponds to a disinfection value set by the second setting unit 20.

As mentioned above, the first setting unit 19 has the first spindle 21. The first spindle 21 comprises an outer thread 23 engaging an inner thread 24 of the housing 11. The second setting unit 20 has the second spindle 22. The second spindle 22 comprises an outer thread 25 engaging an inner thread 26 of the first spindle 21, namely of the opening of the first spindle 21 in which the second spindle 22 is guided.

A rotation of the second spindle 22 relative to the first spindle 21 causes a linear movement of the second spindle 22 relative to the first spindle 21 and relative to the housing 11 while the position of the first spindle 21 remains unchanged. So, when second spindle 22 becomes rotated causing a linear movement of the second spindle 22, the first spindle 21 does neither rotate nor translate.

A rotation of the first spindle 21 relative to the housing 11 causes a linear movement of the first spindle 21 relative to the housing 11 and also a linear movement of the second setting unit 20 relative to the housing 11. So, when first spindle 21 becomes rotated causing a linear movement of the first spindle 21, also the second spindle 22 does translate. However, when first spindle 21 becomes rotated the relative position between first spindle 21 and the second spindle does not change.

The second spindle 22 comprises a front element 27 having a front surface 27a facing towards the thermal element 17. The thermal element 17, namely a second section 17b of the same, abuts against said front surface 27a of the front element 27 of the second spindle 22.

The length of the thermal element 17 depends on the mixing temperature of the mixed water. With an increasing mixing temperature, the length of the thermal element 17 increases. With a decreasing mixing temperature, the length of the thermal element 17 decreases.

If the length of the thermal element 17 increases, the thermal element 17 provides an increasing force to the tubular element 16 thereby moving the tubular element 16 against the spring force provided by the spring element 18 in a direction towards the outlet port 14.

If the length of the thermal element 17 decreases, the thermal element 17 provides a decreasing force to the tubular element 16 thereby moving the tubular element 16 in a direction away from the outlet port 14 by the spring force provided by the spring element 18.

The second setting unit 20 comprises the second spindle 22 and an actuator 28. The actuator 28 is configured to provide the rotation of the second spindle 22 relative to the first spindle 21. The second spindle 22 is configured to provide the linear movement of the same upon the rotation of the second spindle 22 by the actuator 28 in order to select either the first operation mode or the second operation mode for the thermostatic mixing valve 10.

In Figures 1 to 6 the actuator 28 is provided by a handle.

Alternatively, the actuator 28 may be provided by a motor to allow an automated rotation of the second spindle 22 of the second setting unit 20.

The actuator 28 of the second setting unit 20 is non-rotatably connected to the second spindle 22 of the second setting unit 20. So, a rotation of the actuator 28 results into a rotation of the second spindle 22 and by the engagement of the threads 25, 26 also into a linear movement of the second spindle 22. This non-rotatably connection of the actuator 28 and the second spindle 28 is in Figures 1 to 6 provided in such a manner, that an end section 22a of the second spindle 22 having a polygonal cross-section, preferably a square cross-section, penetrates into an opening of the actuator 28 having also a polygonal cross-section, preferably a square cross-section.

In the first embodiment of a thermostatic mixing valve 10 illustrated in Figures 1 to 6, the first setting unit 19 comprises the first spindle 21 and a locking element 29. The first spindle 21 is configured to provide the linear movement of the first spindle 21 when rotating the first spindle 21 to set the nominal value of the mixing temperature. The locking element 29 is configured to lock the first spindle 21 and thereby the nominal value of the mixing temperature set by the first spindle 21. The locking element 29 has a slot 30 acting together with a protrusion 31 provided at the outer surface of the housing 11. Once the relative position of the first spindle 21 relative to the housing 11 has been set, preferably during an assembly of the thermostatic mixing valve 10 in a factory, the relative position of the first spindle 21 relative to the housing 11 and thereby the nominal value of the mixing temperature defined by said relative position is fixed by the locking element 29, namely by attaching the locking element 29 to the first spindle 21 while inserting the protrusion 31 into the slot 30.

When the nominal value of the mixing temperature defined by said relative position of the first spindle 21 of the first setting unit 19 relative to the housing 11 is fixed by the locking element 29 of the first setting unit 19, the relative position of the second spindle 22 of the second setting unit 20 can be changed by the actuator 28 of the second setting unit 20, namely by rotating the second spindle 21 by the actuator 28, wherein the second spindle 21 rotates and translates upon rotation by the actuator 28.

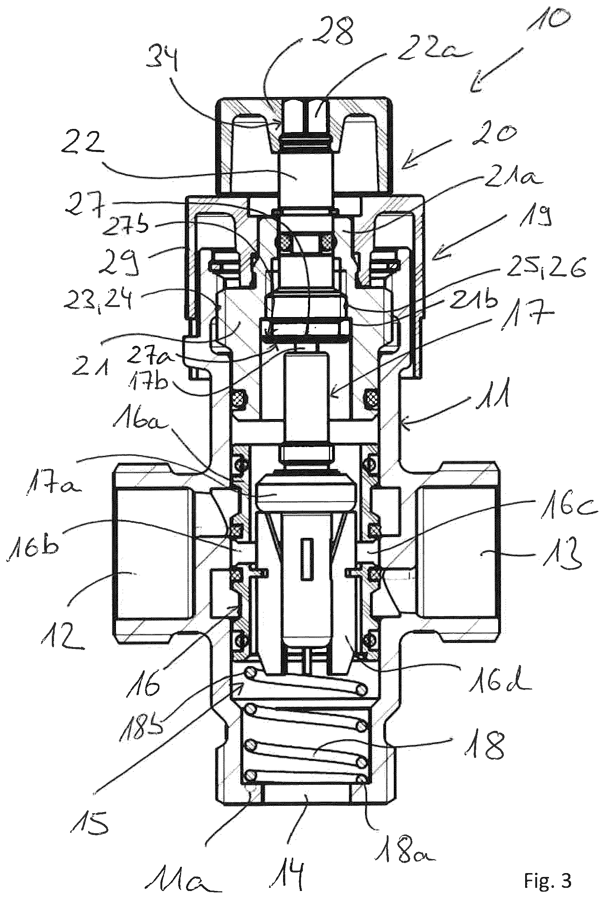

When the second setting unit 20 is in the relative position shown in Figures 1 and 3, the first operation mode for the thermostatic mixing valve 10 is selected. In said relative position the actuator 28 abuts on the locking element 29. In said first operation mode, the nominal value of the mixing temperature set by the first setting unit 19 applies. In the first operation mode, the tubular element 16, the thermal element 17 and the spring element 19 control together the mixing ratio of the mixed water so that the actual value of the mixing temperature corresponds to the nominal value of the mixing temperature set by the first setting unit 19.

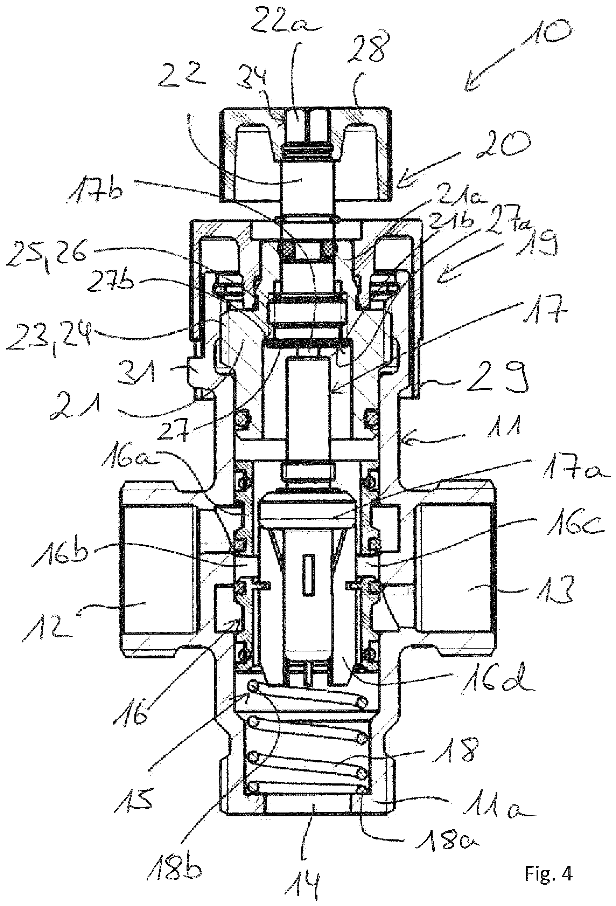

When the second setting unit 20 is in the relative position shown in Figure 4, the second operation mode for the thermostatic mixing valve 10 is selected. In said second operation mode, the nominal value of the mixing temperature set by the first setting unit 19 does not apply. In the thermal disinfection control operation mode, the tubular element 16, the thermal element 17 and the spring element 19 control together the mixing ratio of the mixed water so that the actual value of the mixing temperature corresponds to the disinfection value set by the second setting unit 20. In Figure 4, the actuator 28 does not abut on the locking element 29. In the second operation mode the actuator 28 is lifted up from the locking element 29.

A change of the relative position between the second spindle 22 of the second setting unit 20 and the first spindle 21 of the first setting unit 19 caused by a rotation of the actuator 28 of the second setting unit 20 does not affect the relative position between the first spindle 21 of the first setting unit 19 and the housing 11.

So, after a thermal disinfection is completed, the thermostatic mixing valve 10 can be transferred back from the disinfection operation mode into the first operation mode by moving the second setting unit 20 in the relative position shown in Figures 1 and 3.

As mentioned above, in the first operation mode shown in Figure 3 the actuator 28 abuts on the locking element 29. This means that the actuator 28 rests on the locking element 29 in the first operation mode.

As shown in Figure 3, in the first operation mode the front surface 27a of the front element 27 contacts the thermal element 17 and an opposing back surface 27b of the front element 27 does not contact a stop 21b provided by the first spindle 21.

As also mentioned above, in the second operation mode shown in Figure 4 the actuator 28 does not abut on or against the locking element 29. This means that the actuator 28 is lifted up from the locking element 29 in the second operation mode.

As shown in Figure 4, in the second operation mode the front surface 27a of the front element 27 contacts the thermal element 17 and the opposing back surface 27b of the front element 27 contacts the stop 21b provided by the first spindle 21.

The distance between the back surface 27b of the front element 27 and the stop 21b provided by the first spindle 21 shown in Figure 3 corresponds to the maximum linear movement of the second spindle 22 relative to the first spindle 21 when transferring the thermostatic mixing valve 10 from the first operation mode shown in Figure 3 into the second operation mode shown in Figure 4.

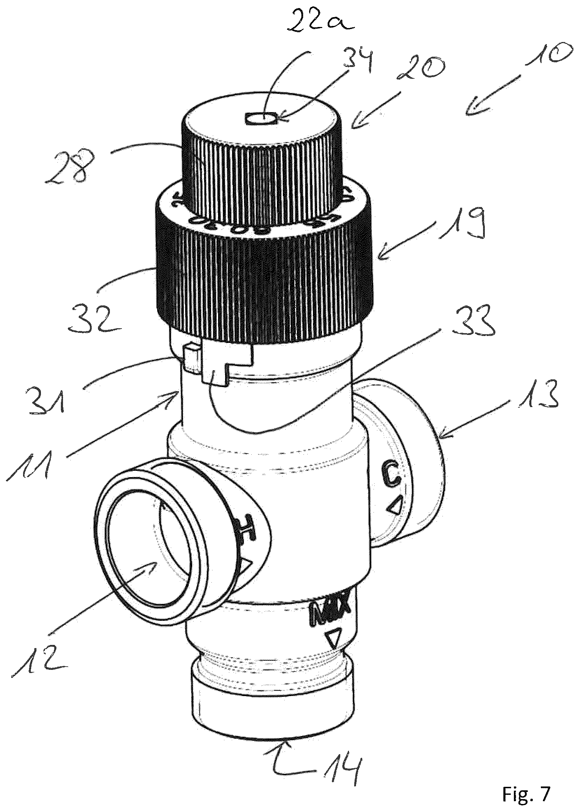

Figure 7 illustrates a second embodiment of a thermostatic mixing valve 10 according to the invention. The embodiment of Figure 7 differs from the embodiment of Figure 7 merely by the replacement of the locking element 29 of the fist setting unit 19 by a handle 32. All other details remain unchanged. So, in the first operation mode of the thermostatic mixing valve 10 shown in Figure 7 the actuator 28 abuts on the locking element 29 while in the in the second operation mode of the thermostatic mixing valve 10 shown in Figure 7 the actuator 28 does not abut on or against the handle 32 but is lifted up from the handle 32.

The handle 32 and the first spindle 21 are configured to provide a linear movement of the first spindle 21 upon a rotation of the handle 29 in order to set the nominal value of the mixing temperature. In the embodiment shown in Figure 7, the nominal value of the mixing temperature can be changed in the field. A stop member 33 of the handle 32 acts together with the protrusion 31 of the housing 11 to limit the rotation of the handle 32. The handle 32 can be rotated once by approximately 360°.

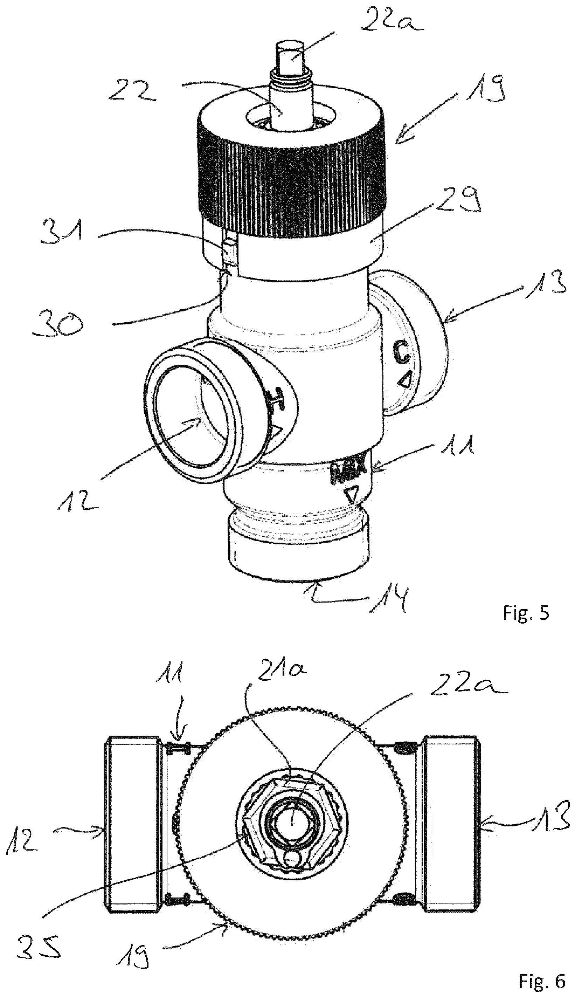

The handle 32 of the first setting unit 19 is non-rotatably connected to the first spindle 21 of the first setting unit 19. So, a rotation of the handle 32 results into a rotation of the first spindle 21 and by the engagement of the threads 23, 24 also into a linear movement of the first spindle 21. This non-rotatably connection of the handle 32 and the first spindle 21 is provided in such a manner, that an end section 21a of the first spindle 21 having a polygonal cross-section, preferably a hexagonal cross-section, penetrates into an opening 35 of the handle 32 having also a polygonal cross-section section. Figure 6 shows such non-rotatably connection between the locking element 29 and the second spindle 28. However, in Figure 6 the locking element 29 is not rotatable because of the interaction of the protrusion 31 of the housing with the slot 30 of the locking element 29.

### List of reference signs

- 10: thermostatic mixing valve
- 11: housing
- 12: first inlet port
- 13: second inlet port
- 14: outlet port
- 15: valve insert
- 16: tubular element
- 16a: outer wall section
- 16b: opening
- 16c: opening
- 16d: rib
- 17: thermal element
- 18: spring element
- 18a: end
- 18b: end
- 19: first setting unit
- 20: second setting unit
- 21: first spindle
- 21a: end section
- 21b: stop
- 22: second spindle
- 22a: end section
- 23: outer thread
- 24: inner thread
- 25: outer thread
- 26: inner thread
- 27: front element
- 27a: front surface
- 27b: back surface
- 28: actuator
- 29: locking element
- 30: slot
- 31: protrusion
- 32: handle
- 33: stop member
- 34: opening
- 35: opening

## Claims

1. Thermostatic mixing valve (10), comprising:
a housing (11), the housing (11) comprising
a first inlet port (12) for water having a first temperature, a second inlet port (13) for water having a second temperature, and
an outlet port (14) for mixed water having a mixing temperature depending on a mixing ratio of the water having the first temperature and of the water having the second temperature,
a valve insert (15) positioned within the housing (11),
wherein the valve insert (15) has a tubular element (16), a thermal element (17) and a spring element (18),
wherein the tubular element (16), the thermal element (17) and the spring element (18) of the valve insert (15) control together the mixing ratio of the mixed water such that an actual value of the mixing temperature corresponds to a nominal value of the mixing temperature,
**characterized by**
a first setting unit (19) having a first spindle (21) and being configured to set the nominal value of the mixing temperature, wherein the first spindle (21) comprises an outer thread (23) engaging an inner thread (24) of the housing (11),
a second setting unit (20) having a second spindle (22) and being configured to select an operation mode of the thermostatic mixing valve (10),
wherein the second spindle (22) is guided within an opening of the first spindle (21), and wherein the second spindle (22) comprises an outer thread (25) engaging an inner thread (26) of the first spindle (21), namely of the opening of the first spindle (21) in which the second spindle (22) is guided,
wherein a rotation of the first spindle (21) relative to the housing (11) causes a linear movement of the first spindle (21) relative to the housing (11) and together with the linear movement of the first spindle (21) relative to the housing (11) a linear movement of the second spindle (22) relative to the housing (11), such that the relative position between the first spindle (21) and the second spindle (22) does not change,
wherein the second spindle (22) is configured to provide a linear movement of the second spindle (22) relative to the first spindle (21) when rotating the second spindle (22) relative to the first spindle (21) while the position of the first spindle (21) remains unchanged in order to select either a first operation mode or a second operation mode for the thermostatic mixing valve (10),
wherein if the first operation mode is selected by the second setting unit (20), the tubular element (16), the thermal element (17) and the spring element (18) control together the mixing ratio of the mixed water such that the actual value of the mixing temperature corresponds to the nominal value set by the first setting unit (19),
wherein if the second operation mode is selected by the second setting unit (20), the thermal element (17) and the spring element (18) control together the mixing ratio of the mixed water such that the actual value of the mixing temperature corresponds to a disinfection value set by the second setting unit (20).

2. Thermostatic mixing valve of claim 1, wherein
the first setting unit (19) comprises the first spindle (21) and a first handle (32),
the first handle (32) and the first spindle (21) are configured to provide a linear movement of the first spindle (21) upon a rotation of the first handle (32) in order to set the nominal value of the mixing temperature.

3. Thermostatic mixing valve of claim 1, wherein
the first setting unit (19) comprises the first spindle (21) and a locking element (29),
wherein the first spindle (21) is configured to provide a linear movement of the first spindle (21) when rotating the first spindle (21) to set the nominal value of the mixing temperature,
wherein the locking element (29) is configured to lock the nominal value of the mixing temperature set by the first spindle (21).

4. Thermostatic mixing valve of one of claims 1 to 3, wherein
the second setting unit (20) comprises the second spindle (22) and an actuator (28),
the actuator (28) is configured to provide the rotation of the second spindle (22) relative to the first spindle (21),
the second spindle (22) is configured to provide the linear movement of the same upon the rotation of the second spindle (22) in order to select either the first operation mode or the second operation mode for the thermostatic mixing valve (10).

5. Thermostatic mixing valve of claim 4, wherein
the actuator (28) of the second setting unit (20) is provided by a handle.

6. Thermostatic mixing valve of claim 4, wherein
the actuator (28) of the second setting unit (20) is provided by a motor.

7. Thermostatic mixing valve of one of claims 1 to 6, wherein
the second spindle (22) comprises a front element (27) with a front surface (27a) facing towards the thermal element (17),
the thermal element (17) abuts against said front surface (27a) of the front element (27) second spindle (22).

8. Thermostatic mixing valve of one of claims 1 to 7, wherein
a first end (18a) of the spring element (18) of the valve insert (15) abuts against the housing (11),
a second end (18b) of the spring element (18) of the valve insert (15) abuts against the tubular element (16) of the valve insert (15),
the thermal element (17) of the valve insert (17) abuts against the tubular element (16) of the valve insert (15).

## Patentansprüche

1. Thermostatmischventil (10), aufweisend:
ein Gehäuse (11), wobei das Gehäuse (11) Folgendes aufweist:
einen ersten Einlassanschluss (12) für Wasser mit einer ersten Temperatur,
einen zweiten Einlassanschluss (13) für Wasser mit einer zweiten Temperatur, und
einen Auslassanschluss (14) für Mischwasser mit einer Mischtemperatur in Abhängigkeit von einem Mischverhältnis des Wassers mit der ersten Temperatur und des Wassers mit der zweiten Temperatur,
einen Ventileinsatz (15), der innerhalb des Gehäuses (11) positioniert ist,
wobei der Ventileinsatz (15) ein rohrförmiges Element (16), ein thermisches Element (17) und ein Federelement (18) aufweist,
wobei das rohrförmige Element (16), das thermische Element (17) und das Federelement (18) des Ventileinsatzes (15) zusammen das Mischverhältnis des Mischwassers so steuern, dass ein Istwert der Mischtemperatur einem Nennwert der Mischtemperatur entspricht, **gekennzeichnet durch**
eine erste Einstelleinheit (19), die eine erste Spindel (21) aufweist und dazu ausgestaltet ist, den Nennwert der Mischtemperatur einzustellen, wobei die erste Spindel (21) ein Außengewinde (23) aufweist, das mit einem Innengewinde (24) des Gehäuses (11) in Eingriff gelangt,
eine zweite Einstelleinheit (20), die eine zweite Spindel (22) aufweist und dazu ausgestaltet ist, einen Betriebsmodus des Thermostatmischventils (10) auszuwählen,
wobei die zweite Spindel (22) innerhalb einer Öffnung der ersten Spindel (21) geführt ist, und wobei die zweite Spindel (22) ein Außengewinde (25) aufweist, das mit einem Innengewinde (26) der ersten Spindel (21), nämlich der Öffnung der ersten Spindel (21), in der die zweite Spindel (22) geführt wird, in Eingriff gelangt,
wobei eine Drehung der ersten Spindel (21) in Bezug zum Gehäuse (11) eine lineare Bewegung der ersten Spindel (21) in Bezug zum Gehäuse (11) und zusammen mit der linearen Bewegung der ersten Spindel (21) in Bezug zum Gehäuse (11) eine lineare Bewegung der zweiten Spindel (22) in Bezug zum Gehäuse (11) bewirkt, sodass sich die relative Position zwischen der ersten Spindel (21) und der zweiten Spindel (22) nicht ändert,
wobei die zweite Spindel (22) dazu ausgestaltet ist, beim Drehen der zweiten Spindel (22) in Bezug zur ersten Spindel (21) eine lineare Bewegung der zweiten Spindel (22) in Bezug zur ersten Spindel (21) vorzusehen, während die Position der ersten Spindel (21) unverändert bleibt, um entweder einen ersten Betriebsmodus oder einen zweiten Betriebsmodus für das Thermostatmischventil (10) auszuwählen,
wobei, wenn der erste Betriebsmodus von der zweiten Einstelleinheit (20) ausgewählt wird, das rohrförmige Element (16), das thermische Element (17) und das Federelement (18) zusammen das Mischverhältnis des Mischwassers steuern, sodass der Istwert der Mischtemperatur dem von der ersten Einstelleinheit (19) eingestellten Nennwert entspricht,
wobei, wenn der zweite Betriebsmodus von der zweiten Einstelleinheit (20) ausgewählt wird, das thermische Element (17) und das Federelement (18) zusammen das Mischverhältnis des Mischwassers so steuern, dass der Istwert der Mischtemperatur einem Desinfektionswert entspricht, der von der zweiten Einstelleinheit (20) eingestellt wird.

2. Thermostatmischventil nach Anspruch 1, wobei
die erste Einstelleinheit (19) die erste Spindel (21) und einen ersten Griff (32) aufweist,
der erste Griff (32) und die erste Spindel (21) dazu ausgestaltet sind, bei einer Drehung des ersten Griffs (32) eine lineare Bewegung der ersten Spindel (21) vorzusehen, um den Nennwert der Mischtemperatur einzustellen.

3. Thermostatmischventil nach Anspruch 1, wobei
die erste Einstelleinheit (19) die erste Spindel (21) und ein Verriegelungselement (29) aufweist,
wobei die erste Spindel (21) dazu ausgestaltet ist, beim Drehen der ersten Spindel (21) eine lineare Bewegung der ersten Spindel (21) vorzusehen, um den Nennwert der Mischtemperatur einzustellen,
wobei das Verriegelungselement (29) dazu ausgestaltet ist, den Nennwert der durch die erste Spindel (21) eingestellten Mischtemperatur zu verriegeln.

4. Thermostatmischventil nach einem der Ansprüche 1 bis 3, wobei
die zweite Einstelleinheit (20) die zweite Spindel (22) und ein Stellglied (28) aufweist,
das Stellglied (28) dazu ausgestaltet ist, die Drehung der zweiten Spindel (22) in Bezug zur ersten Spindel (21) vorzusehen,
die zweite Spindel (22) dazu ausgestaltet ist, bei der Drehung der zweiten Spindel (22) die lineare Bewegung derselben vorzusehen, um entweder den ersten Betriebsmodus oder den zweiten Betriebsmodus für das Thermostatmischventil (10) auszuwählen.

5. Thermostatmischventil nach Anspruch 4, wobei
das Stellglied (28) der zweiten Einstelleinheit (20) durch einen Griff vorgesehen ist.

6. Thermostatmischventil nach Anspruch 4, wobei
das Stellglied (28) der zweiten Einstelleinheit (20) durch einen Motor vorgesehen ist.

7. Thermostatmischventil nach einem der Ansprüche 1 bis 6, wobei
die zweite Spindel (22) ein vorderes Element (27) mit einer dem thermischen Element (17) zugewandten Stirnfläche (27a) aufweist,
das thermische Element (17) an der Stirnfläche (27a) der zweiten Spindel (22) des vorderen Elements (27) anliegt.

8. Thermostatmischventil nach einem der Ansprüche 1 bis 7, wobei
ein erstes Ende (18a) des Federelements (18) des Ventileinsatzes (15) am Gehäuse (11) anliegt,
ein zweites Ende (18b) des Federelements (18) des Ventileinsatzes (15) am rohrförmigen Element (16) des Ventileinsatzes (15) anliegt,
das thermische Element (17) des Ventileinsatzes (17) am rohrförmigen Element (16) des Ventileinsatzes (15) anliegt.

## Revendications

1. Mitigeur thermostatique (10), comprenant :
un corps (11), le corps (11) comprenant
un premier orifice d'entrée (12) pour de l'eau ayant une première température,
un second orifice d'entrée (13) pour de l'eau ayant une seconde température, et
un orifice de sortie (14) pour de l'eau mélangée ayant une température de mélange dépendant d'un rapport de mélange de l'eau ayant la première température et de l'eau ayant la seconde température,
une cartouche (15) positionnée à l'intérieur du corps (11),
la cartouche (15) comportant un élément tubulaire (16), un élément thermique (17) et un élément élastique (18),
l'élément tubulaire (16), l'élément thermique (17) et l'élément élastique (18) de la cartouche (15) régulant ensemble le rapport de mélange de l'eau mélangée de telle sorte qu'une valeur réelle de la température de mélange corresponde à une valeur nominale de la température de mélange,
**caractérisé par**
une première unité de réglage (19) comportant une première broche (21) et étant conçue pour régler la valeur nominale de la température de mélange, la première broche (21) comprenant un filetage extérieur (23) venant en prise avec un filetage intérieur (24) du corps (11),
une seconde unité de réglage (20) comportant une seconde broche (22) et étant conçue pour sélectionner un mode de fonctionnement du mitigeur thermostatique (10),
la seconde broche (22) étant guidée dans une ouverture de la première broche (21), et la seconde broche (22) comprenant un filetage extérieur (25) venant en prise avec un filetage intérieur (26) de la première broche (21), c'est-à-dire de l'ouverture de la première broche (21) dans laquelle est guidée la seconde broche (22),
une rotation de la première broche (21) par rapport au corps (11) provoquant un mouvement linéaire de la première broche (21) par rapport au corps (11) et, conjointement avec le mouvement linéaire de la première broche (21) par rapport au corps (11), un mouvement linéaire de la seconde broche (22) par rapport au corps (11), de telle sorte que la position relative entre la première broche (21) et la seconde broche (22) ne change pas,
la seconde broche (22) étant conçue pour produire un mouvement linéaire de la seconde broche (22) par rapport à la première broche (21) lors d'une rotation de la seconde broche (22) par rapport à la première broche (21) tandis que la position de la première broche (21) reste inchangée afin de sélectionner soit un premier mode de fonctionnement, soit un second mode de fonctionnement pour le mitigeur thermostatique (10),
dans le cas d'une sélection du premier mode de fonctionnement par la seconde unité de réglage (20), l'élément tubulaire (16), l'élément thermique (17) et l'élément élastique (18) régulant ensemble le rapport de mélange de l'eau mélangée de telle sorte que la valeur réelle de la température de mélange corresponde à la valeur nominale réglée par la première unité de réglage (19),
dans le cas d'une sélection du second mode de fonctionnement par la seconde unité de réglage (20), l'élément thermique (17) et l'élément élastique (18) régulant ensemble le rapport de mélange de l'eau mélangée de telle sorte que la valeur réelle de la température de mélange corresponde à une valeur de désinfection réglée par la seconde unité de réglage (20).

2. Mitigeur thermostatique selon la revendication 1, dans lequel
la première unité de réglage (19) comprend la première broche (21) et une première poignée (32),
la première poignée (32) et la première broche (21) sont conçues pour produire un mouvement linéaire de la première broche (21) lors d'une rotation de la première poignée (32) afin de régler la valeur nominale de la température de mélange.

3. Mitigeur thermostatique selon la revendication 1, dans lequel
la première unité de réglage (19) comprend la première broche (21) et un élément de blocage (29),
dans lequel la première broche (21) est conçue pour produire un mouvement linéaire de la première broche (21) lors d'une rotation de la première broche (21) pour régler la valeur nominale de la température de mélange,
dans lequel l'élément de blocage (29) est conçu pour bloquer la valeur nominale de la température de mélange réglée par la première broche (21).

4. Mitigeur thermostatique selon l'une des revendications 1 à 3, dans lequel
la seconde unité de réglage (20) comprend la seconde broche (22) et un actionneur (28),
l'actionneur (28) est conçu pour produire la rotation de la seconde broche (22) par rapport à la première broche (21),
la seconde broche (22) est conçue pour produire son mouvement linéaire lors de la rotation de la seconde broche (22) afin de sélectionner soit le premier mode de fonctionnement, soit le second mode de fonctionnement pour le mitigeur thermostatique (10).

5. Mitigeur thermostatique selon la revendication 4, dans lequel
l'actionneur (28) de la seconde unité de réglage (20) est constitué par une poignée.

6. Mitigeur thermostatique selon la revendication 4, dans lequel
l'actionneur (28) de la seconde unité de réglage (20) est constitué par un moteur.

7. Mitigeur thermostatique selon l'une des revendications 1 à 6, dans lequel
la seconde broche (22) comprend un élément avant (27) avec une surface avant (27a) tournée vers l'élément thermique (17),
l'élément thermique (17) bute contre ladite surface avant (27a) de la seconde broche (22) de l'élément avant (27).

8. Mitigeur thermostatique selon l'une des revendications 1 à 7, dans lequel
une première extrémité (18a) de l'élément élastique (18) de la cartouche (15) bute contre le corps (11),
une seconde extrémité (18b) de l'élément élastique (18) de la cartouche (15) bute contre l'élément tubulaire (16) de la cartouche (15),
l'élément thermique (17) de la cartouche (17) bute contre l'élément tubulaire (16) de la cartouche (15).
